## Europäisches Patentamt
## European Patent Office
## Office européen des brevets

(11) Veröffentlichungsnummer: **0 075 760**
**B1**

(12) **EUROPÄISCHE PATENTSCHRIFT**

(45) Veröffentlichungstag der Patentschrift: **02.03.88**

(51) Int. Cl.⁴: **B 60 C 11/00**

(21) Anmeldenummer: **82108299.7**

(22) Anmeldetag: **09.09.82**

(54) Fahrzeugluftreifen.

(30) Priorität: **25.09.81 DE 3138189**

(43) Veröffentlichungstag der Anmeldung:
**06.04.83 Patentblatt 83/14**

(45) Bekanntmachung des Hinweises auf die
Patenterteilung:
**02.03.88 Patentblatt 88/09**

(84) Benannte Vertragsstaaten:
**AT BE CH DE FR GB IT LI LU NL SE**

(56) Entgegenhaltungen:
**DE-A-2 712 815**
**FR-A-2 029 903**
**FR-A-2 283 018**
**FR-A-2 387 806**
**GB-A-2 008 043**

**GUMMIBEREIFUNG, Oktober 1977, Seite 29,
Biehlefel d, DE; SEMPERIT AG:
"Wintersicherheit auch für schwere Brummer",
M 581**

(73) Patentinhaber: **Continental Gummi-Werke
Aktiengesellschaft
Königsworther Platz 1
D-3000 Hannover 1 (DE)**

(72) Erfinder: **Huinink, Heinrich, Dipl.-Ing.
Elbinger Strasse 2
D-3008 Garbsen 1 (DE)**
Erfinder: **Flebbe, Werner, Dipl.-Math.
Albert-Schweitzer-Strasse 52
D-3057 Neustadt e.Rbge (DE)**
Erfinder: **Herfort, Werner
An der Schafbahn 20
D-3000 Hannover 73 (DE)**

(56) References cited:
**BUSSIEN: "Automobiltechnisches Handbuch",
Ergänzungsbuch zur 18.Auflage, 1978**

Courier Press, Leamington Spa, England.

EP 0 075 760 B1

## Beschreibung

Die Erfindung betrifft einen Fahrzeugluftreinen mit einem profilierten Laufstreifen, wobei die Laufflächenränder von im Grundriß etwa rechtèckigen und sich quer zur Reifenumfangsrichtung erstreckenden Blöcken gebildet sind und sich hierzwischen im Laufflächenmittelbereich ausschließlich zwei Blockreihen befinden, deren Blöcke paarweise zusammengehören und deren Blöcke eines jeden Paares sich in Querrichtung des Reifens gesehen überlappen, wobei die Blöcke eines jeden Paares durch eine stufen förmige Nut voneinander getrennt sind, die in Reifenumfangsrichtung verlaufende Endabschnitte und einen diese verbindenden Mittelabschnitt aufweist, der spraktisch quer zur Reifenumfangsrichtung verläuft.

Bei bekannten Fahrzeugluftreifen dieser Ausbildung (GB—A—2 008 043) sind die Blöcke der Mittelzone des Laufstreifens bogenförmig gestaltet; die in Umfangsrichtung des Reifens aufeinanderfolgenden paarweise zusammengehörigen Blöcke sind dabei durch Schrägnuten voneinander getrennt. Diese bekannte Laufflächenprofilierung ist für Lastkraftwagen und somit nicht für schnelle Personenkraftwagen vorgesehen. Die erwähnten bogenförmigen Blöcke erfahren zudem bei größeren Seitenkräften eine unerwünschte Querverformung.

Der Erfindung liegt die Aufgabe zugrunde, Fahrzeugluftreifen der eingangs erwähnten Ausbildung so. auszuführen, daß auch bei hohen Geschwindigkeiten das unter der Lauffläche befindliche Wasser in ausreichendem Maße zur Seite hin abgeführt werden kann. Angestrebt werden außerdem standfeste Blöcke in der Mitte der Lauffläche, um große Querbeanspruchungen des Reifens insbesondere in der Kurvenfahrt zulassen zu können.

Diese Aufgabe wird erfindungsgemäß dadurch gelöst, daß jedes Blockpaar von dem in Umfangsrichtung des Reifens folgenden Blockpaar durch eine zickzackförmige Nut getrennt ist und die paarweise zusammengehörigen Blöcke einen Grundriß im wesentlichen nach Art eines S (Spiegelschrift) aufweisen mit einem sich in Umfangsrichtung des Reifens erstreckenden Mittelabschnitt und quer dazu verlaufenden Endabschnitten.

Die so ausgestaltete Mittelzone der Lauffläche läßt auch bei hohen Geschwindigkeiten Wasser zur Seite hin abführen. Die Abnutzung des Reifens ist günstig und gleichmäßig. Die in der Mitte der Lauffläche befindlichen Blöcke sind zudem von ausreichender Querstabilität. Sie sind gegen Lateralbeanspruchung widerstandsfähig.

Ein Ausführungsbeispiel der Erfindung ist in der Zeichnung dargestellt. Es zeigen:

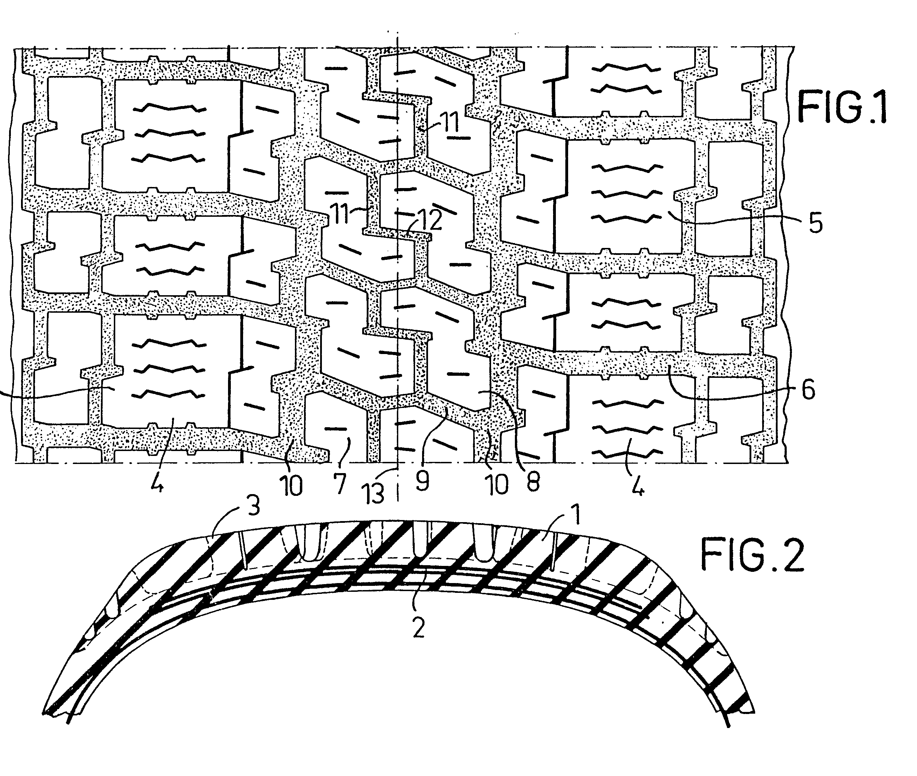

Fig. 1 eine Teildraufsicht auf die Profilierung eines Fahrzeugluftreifens für Personenkraftwagen und

Fig. 2 einen radialen Teilschnitt durch den Reifen gemäß Figur 1.

Der Laufstreifen 1 des Reifens ist oberhalb des Reifengürtels 2 angeordnet. Im Bereich beider Ränder der Lauffläche 3 befindet sich eine Blockreihe 4, die aus im Grundriß etwa rechteckigen, quer zum Reifen verlaufenden Blöcken 5 gebildet ist, welche ihrerseits durch vergleichsweise breite Nuten 6 voneinander getrennt sind.

Die Mittelzone der Lauffläche 3 besteht aus paarweise zusammengehörigen Blöcken 7, 8, die in etwa die Grundrißgestalt nach Art eines schlanken S (Spiegelschrift) haben und in Querrichtung des Reifens nebeneinanderliegend Paare bilden, wobei in Umfangsrichtung aufeinanderfolgende Paare durch flach zickzackförmig verlaufende, in etwa quer zum Reifen gerichtete Nuten 9 voneinander getrennt sind, während die Trennung dieser Paare zu den Blockreihen 4 hin durch ebenfalls etwa zickzackförmige Nuten 10 erfolgt.

Die Blöcke 7, 8 eines Paares sind durch stufenförmige Nuten voneinander getrennt, deren Endabschnitte 11 in Reifenumfangsrichtung verlaufen, während die dazwischen befindlichen Nutabschnitte 12 praktisch quer zur Reifenumfangsrichtung verlaufend angeordnet sind. Die Nutabschnitte 11 und 12 bilden somit eine stufenartige Vertiefung in der Laufflächenmitte. Der Verlauf dieser Nuten ist dabei auch so gewählt, daß beide Blöcke 7, 8 über die Laufflächenmitte bei 13 reichen, so daß sich also die Blöcke 7, 8 im Bereich des Nutenbereichs 12 in Querrichtung des Reifens gesehen überlappen.

## Patentansprüche

1. Fahrzeugluftreifen mit einem profilierten Laufstreifen, wobei die Laufflächenränder von im Grundriß etwa rechteckigen und sich quer zur Reifenumfangsrichtung erstreckenden Blöcken (5) gebildet sind und sich hierzwischen im Laufflächenmittelbereich ausschließlich zwei Blockreihen befinden, deren Blöcke (7, 8) paarweise zusammengehören und deren Blöcke (7, 8) eines jeden Paares sich in Querrichtung des Reifens gesehen überlappen, wobei die Blöcke (7, 8) eines jeden Paares durch eine stufenförmige Nut voneinander getrennt sind, die in Reifenumfangsrichtung verlaufende Endabschnitte (11) und einen diese verbindenden Mittelabschnitt (12) aufweist, der praktisch quer zur Reifenumfangsrichtung verläuft, dadurch gekennzeichnet, daß jedes Blockpaar von dem in Umfangsrichtung des Reifens folgenden Blockpaar durch eine zickzackförmige Nut (9) getrennt ist und die paarweise zusammengehörige Blöcke (7, 8) einen Grundriß im wesentlichen nach Art eines S (Spiegelschrift) aufweisen mit einem sich in Umfangsrichtung des Reifens erstreckenden Mittelabschnitt und quer dazu verlaufenden Endabschnitten.

2. Fahrzeugluftreifen nach Anspruch 1, dadurch gekennzeichnet, daß die Blöcke (7, 8) eines jeden Paares sich im Bereich des Mittelabschnittes (12) in Querrichtung des Reifens überlappen und beide die Laufflächenmitte (Mittellinie 13) überragen.

3. Fahrzeugluftreifen nach den Ansprüchen 1 und 2, dadurch gekennzeichnet, daß die die Mittelzone bildenden Blöcke (7, 8) von den seitlich außen gelegenen Blöcken (5) durch in etwa zickzackförmige Nuten (10) getrennt sind, von denen die querverlaufenden Nuten (6) zwischen den am Rand der Lauffläche befindlichen Blöcken (5) ausgehen.

**Revendications**

1. Pneumatique pour véhicule comportant une bande de roulement profilée, où les bords de la surface de roulement sont constitués par des blocs (5) ayant un contour à peu près rectangulaire et s'étendant perpendiculairement à la direction périphérique du pneumatique et où il est prévu dans une zone centrale de la surface de roulement exclusivement deux rangées de blocs, dont les blocs (7, 8) sont associés par paires, et dont les bords (7, 8) de chaque paire se chevauchent, en considérant une direction transversale du pneumatique, les blocs (7, 8) de chaque paire étant séparés l'un de l'autre par une rainure en forme de gradin, qui comporte des parties extrêmes (11) s'étendant dans la direction périphérique du pneumatique, ainsi qu'une partie centrale (12) assurant leur liaison et qui est orientée pratiquement perpendiculairement à la direction périphérique du pneumatique, caractérisé en ce que chaque paire de blocs est séparée de la paire de blocs la suivant dans la direction périphérique du pneumatique au moyen d'une rainure (9) en forme de zig-zag et les blocs (7, 8) associés par paires ont, en vue en plan, un contour sensiblement en forme de S (écriture renversée), comportant une partie centrale s'étendant dans la direction périphérique du pneumatique et des parties extrêmes orientées perpendiculairement à celle-ci.

2. Pneumatique pour véhicule selon la revendication 1, caractérisé en ce que les blocs (7, 8) de chaque paire se chevauchent, dans une zone de la partie centrale (12), dans la direction transversale du pneumatique, et les deux blocs font saillie du milieu (ligne médiane 13) de la surface de roulement.

3. Pneumatique pour véhicule selon les revendications 1 et 2, caractérisé en ce que les blocs (7, 8) formant la zone centrale sont séparés des blocs (5) disposés latéralement à l'extérieur, au moyen de rainures (10) à peu près en forme de zig-zag, parmi lesquelles les rainures (6) orientées transversalement partent d'entre les blocs (5) se trouvant sur le bord de la surface de roulement.

**Claims**

1. Pneumatic vehicle tyre having a profiled tread strip, wherein the tread surface edges are formed from blocks (5) which have a substantially rectangular configuration and extend transversely relative to the circumferential direction of the tyre, and two rows of blocks are exclusively situated therebetween in the central region of the tread surface, the blocks (7, 8) of the two rows belonging together in pairs, and the blocks (7, 8) of each pair overlapping each other when viewed in the transverse direction of the tyre, wherein the blocks (7, 8) of each pair are separated from each other by a step-like groove which has end portions (11) extending in the circumferential direction of the tyre and a central portion (12) which joins the end portions and extends substantially transversely relative to the circumferential direction of the tyre, characterised in that each pair of blocks is separated from the next pair of blocks, when viewed in the circumferential direction of the tyre, by means of a zig-zag-shaped groove (9), and the blocks (7, 8), which belong together in pairs, have a substantially S-shaped configuration (mirror-writing) with a central portion extending in the circumferential direction of the tyre and end portions extending at right angles thereto.

2. Pneumatic vehicle tyre according to claim 1, characterised in that the blocks (7, 8) of each pair overlap each other in the region of the central portion (12) in the transverse direction of the tyre and both protrude beyond the centre (centre line 13) of the tread surface.

3. Pneumatic vehicle tyre according to claims 1 and 2, characterised in that the blocks (7, 8), forming the central zone, are separated from the laterally external blocks (5) by means of substantially zig-zag-shaped grooves (10), from which the transversely extending grooves (6) extend between the blocks (5) situated at the edge of the tread surface.

FIG.1

FIG.2